# EUROPÄISCHE PATENTANMELDUNG

(11) **EP 1 886 765 A1**
(43) Veröffentlichungstag der Anmeldung: **13.02.2008**
(21) Anmeldenummer: 07113613.9
(22) Anmeldetag: 01.08.2007
(51) Int. Cl.: B23Q 39/02, B23Q 3/10, F16B 7/04

(54) **Werkzeugträgereinrichtung und Vorrichtung zur Verarbeitung flacher Zuschnitte**

(71) Anmelder: Kama GmbH, 01237 Dresden (DE)
(72) Erfinder: Herfurth, Bernd, 01157 Dresden (DE); Pieper, Steffen, 01324 Dresden (DE)
(74) Vertreter: Lippert, Stachow & Partner

(57) **Zusammenfassung**

Die vorgeschlagene Werkzeugträgereinrichtung zur verstellbaren Anordnung von Werkzeugen entlang eines Formungspfads umfasst zwei parallel zueinander in der Längsrichtung des Formungspfads verlaufend und oberhalb davon angeordnete Trägerschienen (1), weiterhin mindestens einen Querträger (3), der an mehreren vorbestimmten Positionen entlang des Formungspfads jeweils mit beiden Trägerschienen (1) lösbar so verbindbar ist, dass der Querträger (3) quer zur Längsrichtung des Formungspfads angeordnet ist, sowie weiterhin mindestens einen Werkzeughalter (4), der mit dem Querträger (3) lösbar verbindbar ist.

## Beschreibung

Nachfolgend werden eine Werkzeugträgereinrichtung, insbesondere für eine Vorrichtung zur Verarbeitung flacher Zuschnitte, beispielsweise Kartonagen, sowie eine derartige Vorrichtung beschrieben. Die in einem vorhergehenden Arbeitsschritt beispielsweise durch Stanzen aus Papierbögen oder Kartonbögen hergestellten Zuschnitte müssen zur Herstellung bestimmter Artikel wie Broschüren, Präsentationsmappen und so weiter in weiteren Arbeitsschritten gefalzt, geklebt und so weiter werden. Die beschriebene Vorrichtung dient der Durchführung solcher Arbeitsschritte.

Hierzu umfasst die Vorrichtung eine Transporteinrichtung zum Transport der Zuschnitte entlang eines Formungspfads. Die Transporteinrichtung kann beispielsweise eine Mehrzahl beidseitig in je einer Lagerbank drehbar gelagerter Transportwalzen umfassen, von denen wenigstens ein Teil antreibbar ist. Weiterhin kann die Vorrichtung auswechselbare Werkzeuge zur Führung der Zuschnitte auf der Transporteinrichtung sowie zur Durchführung der einzelnen Verarbeitungsschritte, deren Positionen relativ zu den Transportwalzen der Transporteinrichtung einstellbar sein können, umfassen. Derartige Werkzeuge können beispielsweise Niederhalter, Falzschultern, Klebstoffspender, Luftdüsen, Sensoren und so weiter sein, die die Zuschnitte gegen seitliches Verrutschen fixieren, die Zuschnitte falzen, Klebstoff auftragen, Luft einblasen, bestimmte Messwerte erfassen und so weiter.

Abhängig von dem zu fertigenden Produkt werden unterschiedlichste Anordnungen verschiedener Werkzeuge entlang des Formungspfads benötigt. Dies bedeutet, dass bei jeder Umstellung der Produktion die Art und Reihenfolge der benötigten Werkzeuge neu konfiguriert werden muss. Dabei hängt die Qualität der erzeugten Produkte wesentlich von der Genauigkeit der Positionierung der einzelnen Werkzeuge relativ zu den Transportwalzen der Transporteinrichtung ab. Die beschriebene Werkzeugträgereinrichtung ermöglicht eine genaue Positionierung der Werkzeuge.

Die vorgeschlagene Werkzeugträgereinrichtung zur verstellbaren Anordnung von Werkzeugen entlang eines Formungspfads umfasst zwei parallel zueinander in der Längsrichtung des Formungspfads verlaufend und oberhalb davon angeordnete Trägerschienen, weiterhin mindestens einen Querträger, der an mehreren vorbestimmten Positionen entlang des Formungspfads jeweils mit beiden Trägerschienen lösbar so verbindbar ist, dass der Querträger quer zur Längsrichtung des Formungspfads angeordnet ist, sowie weiterhin mindestens einen Werkzeughalter, der mit dem Querträger lösbar verbindbar ist.

Gegenüber Lösungen, bei denen jeder Werkzeughalter an einer separaten, die Transporteinrichtung der Vorrichtung zur Verarbeitung flacher Zuschnitte überspannenden Brücke angeordnet ist, ergibt sich mit der beschriebenen Lösung der Vorteil, dass die Position eines Werkzeugs entlang des Formungspfads schnell und einfach dadurch verändert werden kann, dass die Trägerschienen der Werkzeugträgereinrichtung relativ zur Transporteinrichtung fest installiert sind und ein Querträger zur Aufnahme eines Werkzeughalters bedarfsweise schnell und einfach aus einer vorbestimmten Position entnommen und in einer anderen vorbestimmten Position angeordnet werden kann. Dieser Positionswechsel kann bei der beschriebenen Werkzeugträgereinrichtung von einer einzelnen Bedienperson und von einer Seite der Transporteinrichtung aus vorgenommen werden.

In einer ersten Ausgestaltung ist vorgesehen, dass der Werkzeughalter an einer beliebigen Position entlang des Querträgers positionierbar ist. Alternativ kann die Werkzeugträgereinrichtung auch so ausgestaltet sein, dass der Werkzeughalter an mehreren vorbestimmten Positionen entlang des Querträgers positionierbar ist.

Die Werkzeugträgereinrichtung kann auf verschiedenste Weise an einer Vorrichtung zur Verarbeitung flacher Zuschnitte angebracht werden, beispielsweise indem die Trägerschienen mit ohnehin vorhandenen Elementen des Rahmens der Vorrichtung verbunden werden. In einer Ausgestaltung ist hingegen vorgesehen, dass weiterhin an jeder Trägerschiene mindestens ein Stützelement zur Anbringung der Trägerschiene oberhalb des Formungspfads vorgesehen ist. Derartige Stützelemente können beispielsweise senkrechte Stützstäbe sein, die sich von den Trägerschienen abwärts erstrecken, so dass ihre unteren Enden mit Elementen der Transporteinrichtung der Vorrichtung, beispielsweise den Lagerbänken von Transportwalzen einer derartigen Transporteinrichtung, verbunden werden können.

Um die Änderung der Position eines Querträgers entlang des Formungspfads zu erleichtern kann vorgesehen sein, dass mindestens eine Trägerschiene an jeder vorbestimmten Position ein Aufnahmemittel zur formschlüssigen Aufnahme eines Endes eines Querträgers aufweist. Die Anordnung von Aufnahmemitteln an den vorbestimmten Positionen erleichtert die Positionierung der Querträger und verhindert Fehlpositionierungen. Um dies zu erreichen kann beispielsweise vorgesehen sein, dass das Aufnahmemittel zum Einschieben eines Endes des Querträgers quer zur Längsrichtung des Formungspfads ausgebildet ist. Hierdurch wird das Ende des Querträgers zumindest in der Längsrichtung des Formungspfads eindeutig positioniert.

Beispielsweise kann ein derartiges Aufnahmemittel so ausgestaltet sein, dass das Aufnahmemittel eine dem Querschnitt des Querträgers entsprechende Aussparung ist, die in einer Weiterbildung nach oben offen sein kann.

In einer einfachen Ausgestaltung sind sowohl die Trägerschiene als auch die Querträger aus einem Rechteckhohlprofil gefertigt, wobei in einer Seitenfläche der Trägerschiene an den vorbestimmten Positionen rechteckige Löcher angeordnet sind, deren Form dem Querschnitt der Querträger entspricht.

Bei einer Trägerschiene aus Vollmaterial wird der gleiche Effekt durch ein Sackloch erreicht. Der Querträger kann in ein solches rechteckiges Loch seitlich, das heißt quer zur Längsrichtung des Formungspfads, eingeschoben werden, so dass das rechteckige Loch eine Verschiebung des Querträgers in der Längsrichtung des Formungspfads und in vertikaler Richtung verhindert. Die Bewegung des Querträgers in horizontaler Richtung quer zur Längsrichtung des Formungspfads wird durch die zweite Seitenfläche des Rechteckhohlprofils der Trägerschiene, in der keine Löcher vorgesehen sind, begrenzt.

Eine weitere einfache Ausgestaltung der Werkzeugträgereinrichtung sieht vor, dass in einer Auflagefläche der Trägerschiene Bohrungen und an der Unterseite des Querträgers in die Bohrungen der Trägerschiene einführbare Zapfen vorgesehen sind. Alternativ können die Zapfen an der Auflagefläche der Trägerschiene und die Bohrungen an den Unterseiten der Querträger vorgesehen sein. Alle Ausgestaltungen sind rein beispielhaft aufgezählt; weitere Ausgestaltungen des vorgeschlagenen Konzepts zur Anordnung der Querträger an vorbestimmten Positionen der Trägerschiene sind möglich, ohne vom Grundgedanken der vorgeschlagenen Werkzeugträgereinrichtung abzuweichen.

In einer weiteren Ausgestaltung der vorgeschlagenen Werkzeugträgereinrichtung ist vorgesehen, dass mindestens eine Trägerschiene einen Stab mit einer ebenen Auflagefläche umfasst, an deren seitlicher Begrenzung parallel zum Stab verlaufend ein erster Materialstreifen angeordnet ist, der die Auflagefläche nach oben überragt und der an jeder vorbestimmten Position eine nach oben offene Aussparung aufweist. Der Querträger kann in diesem Fall mit seinem Ende von oben in die Aussparung eingelegt werden, so dass das Ende des Querträgers auf der Auflagefläche aufliegt und so in der nach oben offenen Aussparung angeordnet ist, dass eine Verschiebung des Querträgers in der Längsrichtung des Formungspfads verhindert wird. Weitere Maßnahmen zur Verhinderung oder Begrenzung von Bewegungen in den beiden anderen Raumrichtungen können an der Trägerschiene oder/und am Querträger, beispielsweise in Form von Anschlägen, vorgesehen sein.

In einer beispielhaften Ausgestaltung kann vorgesehen sein, dass an der der Auflagefläche des Stabs abgewandten Seite des ersten Materialstreifens ein zweiter Materialstreifen vorgesehen ist, der die Funktion eines Anschlags übernimmt, der die Bewegung des Querträgers quer zur Längsrichtung des Stabs begrenzt. Weiter kann vorgesehen sein, dass der zweite Materialstreifen den ersten Materialstreifen nach oben überragt und der obere Bereich des zweiten Materialstreifens so abgekantet ist, dass der abgekantete obere Bereich des zweiten Materialstreifens horizontal über den ersten Materialstreifen ragt und so die Funktion eines Anschlags, oder Niederhalters, übernimmt, der die Bewegung des Querträgers in vertikaler Richtung begrenzt.

Es kann weiter vorgesehen sein, dass mindestens ein Querträger an mindestens einem Ende eine Klemmeinrichtung zur Herstellung einer kraftschlüssigen Verbindung mit einer Trägerschiene aufweist. In diesem Fall wird das entsprechende Ende des Querträgers durch die von der Klemmeinrichtung auf die Trägerschiene ausgeübte Kraft an der gewünschten Position gehalten.

In einem Ausführungsbeispiel umfasst eine erste Trägerschiene der Werkzeugträgereinrichtung einen Stab mit einer ebenen Auflagefläche, an deren seitlicher Begrenzung parallel zum Stab verlaufend ein erster Materialstreifen mit Aussparungen und einen zweiten Materialstreifen mit einem abgekanteten oberen Bereich angeordnet ist und eine zweite Trägerschiene der Werkzeugträgereinrichtung einen Stab mit einer ebenen Auflagefläche, an deren seitlicher Begrenzung parallel zum Stab verlaufend ein erster Materialstreifen mit Aussparungen angeordnet ist. Die Querträger in diesem Ausführungsbeispiel sind Rechteckhohlprofile, die jeweils an einem Ende mit einer Klemmeinrichtung versehen sind.

Die Anbringung eines Querträgers an einer vorbestimmten Position kann von einer Bedienperson von einer Seite der Transporteinrichtung aus vorgenommen werden, indem das erste Ende des Querträgers, das keine Klemmeinrichtung aufweist, in das von einer Aussparung des ersten Materialstreifens und vom abgekanteten oberen Bereich des zweiten Materialstreifens gemeinsam gebildete Aufnahmemittel eingeschoben wird und anschließend das zweite Ende des Querträgers, das eine Klemmeinrichtung aufweist, von oben in das durch eine nach oben offene Aussparung des ersten Materialstreifens der zweiten Trägerschiene gebildete Aufnahmemittel eingelegt wird, so dass das zweite Ende auf der Auflagefläche der zweiten Trägerschiene aufliegt und schließlich mithilfe der Klemmeinrichtung eine kraftschlüssige Verbindung zwischen dem zweiten Ende des Querträgers und der zweiten Trägerschiene hergestellt wird.

Der Werkzeughalter der beschriebenen Werkzeugträgereinrichtung kann eine Haltestrebe zur Verbindung mit dem Querträger aufweisen, die beispielsweise durch eine Klemmeinrichtung kraftschlüssig am Querträger angebracht werden kann. Dabei kann vorgesehen sein, dass die Haltestrebe eine Höhenverstelleinrichtung zur vertikalen Verstellung des Werkzeugs umfasst. In einer Ausgestaltung ist vorgesehen, dass die Höhenverstelleinrichtung einen Exzenterhebel umfasst, der auf dem oberen Ende einer ersten, mit dem Querträger verbindbaren Komponente der Haltestrebe aufliegt und der an einer zweiten, das Werkzeug tragenden Komponente der Haltestrebe drehbar so gelagert ist, dass das Werkzeug bei Betätigung des Exzenterhebels je nach dessen Betätigungsrichtung in vertikaler Richtung abgesenkt oder angehoben wird.

Eine solche erste Komponente der Haltestrebe kann beispielsweise eine Rohrhülse sein, die mittels einer Klemmeinrichtung mit dem Querträger verbunden ist. Die zweite Komponente der Haltestrebe kann ein in der Rohrhülse verschiebbar gelagerter Stab sein, an dessen unterem Ende das Werkzeug angebracht ist. In einer ersten Stellung des Exzenterhebels befindet sich der verschiebbar gelagerte Stab mit dem daran angeordneten Werkzeug in einer ersten, angehobenen Position und in einer zweiten Stellung des Exzenterhebels in einer zweiten, abgesenkten Position. Alternativ oder zusätzlich dazu kann vorgesehen sein, dass die Höhenverstelleinrichtung Mittel zur stufenlosen Feinjustage der vertikalen Position des Werkzeugs umfasst, beispielsweise Stellschrauben mit einem Feingewinde.

Zur Arbeitserleichterung bei der Herstellung einer vorgegebenen Konfiguration der Werkzeuge relativ zur Transporteinrichtung kann weiter vorgesehen sein, dass an mindestens einer Trägerschiene im Bereich mindestens einer vorbestimmten Position eine diese Position eindeutig identifizierende Bezeichnung sichtbar angebracht ist. Beispielsweise können die vorbestimmten Positionen fortlaufend nummeriert und die zugehörigen Nummern an der Innenseite oder/und Außenseite der Trägerschiene angebracht sein.

Dabei muss nicht an jeder vorbestimmten Position eine eindeutig identifizierende Bezeichnung angebracht sein; in vielen Fällen reicht es aus, wenn nur an jeder zweiten oder jeder fünften und so weiter Position eine Bezeichnung angebracht ist. Eine derartige Identifizierung der vorbestimmten Positionen kann beispielsweise auch für Steuervorgänge an den Werkzeugen genutzt werden, beispielsweise indem an der Vorrichtung eine speicherprogrammierbare Steuerung (SPS) vorgesehen ist, in deren Datenspeicher Informationen über die Koordinaten jeder vorbestimmten Position gespeichert sind, so dass Steuerungsabläufe für neue Werkzeugkonfigurationen auf einfache Weise programmierbar sind.

Eine Werkzeugträgereinrichtung der oben beschriebenen Art kann Bestandteil einer Vorrichtung zur Verarbeitung flacher Zuschnitte sein. Eine derartige Vorrichtung kann neben der Werkzeugträgereinrichtung eine Transporteinrichtung zum Transport der Zuschnitte entlang des Formungspfads umfassen, die eine Anordnung beidseitig des Formungspfads mit gleichem Abstand drehbar gelagerter Transportwalzen umfasst und bei der die Werkzeugträgereinrichtung so angeordnet ist, dass das oder die Werkzeuge relativ zu den Transportwalzen positionierbar angeordnet sind. Vorteilhaft ist aber vorgesehen, dass der Abstand vorbestimmter Positionen entlang der Trägerschienen der Werkzeugträgereinrichtung gleich dem Abstand der Transportwalzen der Transporteinrichtung ist.

Hierdurch ergibt sich ohne weitere Einstellmaßnahmen eine räumliche Beziehung des Werkzeughalters - und dadurch des daran angeordneten Werkzeugs - zu den Transportwalzen der Transporteinrichtung einer entsprechenden Vorrichtung zur Verarbeitung flacher Zuschnitte.

Die Werkzeuge werden durch ihre Befestigung an einer jeden Querstrebe immer in der Längsrichtung des Formungspfads exakt in der jeweils gewünschten Position relativ zu den Transportwalzen ausgerichtet, so dass z. B. Anpressrollen von Niederhaltern deckungsgleich mit darunter angeordneten Transportwalzen sind, um ein optimales Ergebnis zu erzielen. In gleicher Weise werden beispielsweise Klebstoffspender, Luftdüsen, Sensoren usw. genau oberhalb einer Lücke zwischen zwei benachbarten Transportwalzen positioniert, indem entsprechend ausgestaltete Werkzeughalter, ohne weitere Einstellung der Position in der Längsrichtung des Transportpfads, einfach an einem Querträger befestigt werden. Dabei ist die Befestigung der Werkzeuge sowohl vor als auch hinter einer Querstrebe möglich; eine weitere Justage in der Längsrichtung ist nicht erforderlich.

Durch die Kennzeichnung der vorbestimmten Rüstpositionen ist ein schnelles Einrichten von sich wiederholenden Arbeiten und Werkzeugkonfigurationen möglich. Die Übergabe der Positionen von gerüsteten Werkzeugen anhand einer eindeutig i-dentifizierenden Bezeichnung, beispielsweise an eine SPS, erübrigt das Messen und Eingeben von Abständen zwischen Sensoren und gesteuerten Werkzeugen.

Nachfolgend wird die beschriebene Werkzeugträgereinrichtung an Hand eines Ausführungsbeispiels und zugehöriger Zeichnungen näher beschrieben, worin
- Fig. 1: die Werkzeugträgereinrichtung in perspektivischer Ansicht,
- Fig. 2: eine Detailansicht der ersten Trägerschiene und
- Fig. 3: eine Detailansicht der zweiten Trägerschiene zeigt.

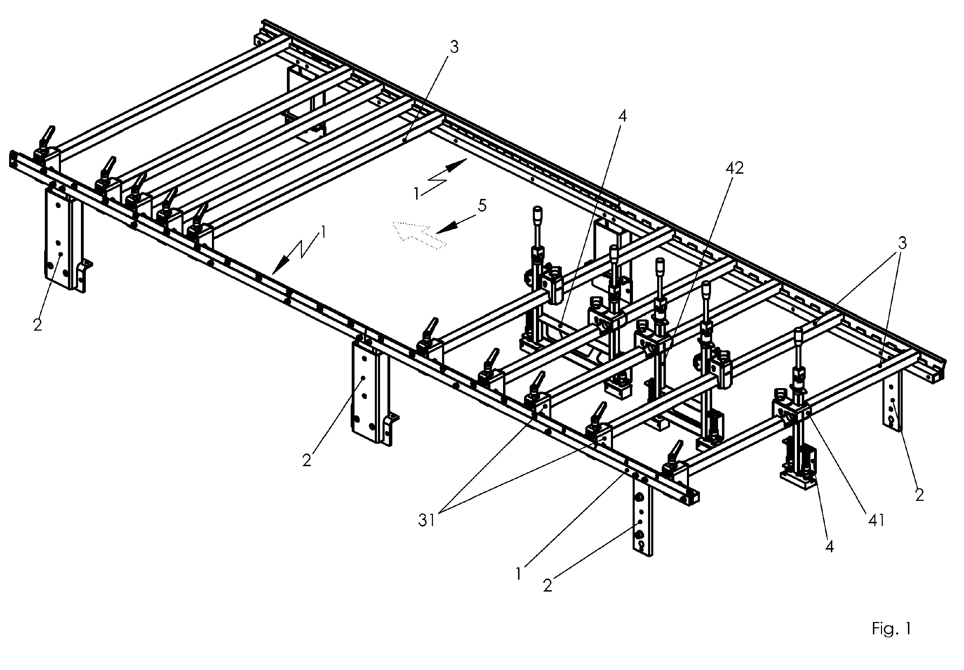

Die Werkzeugträgereinrichtung in Fig. 1 zur verstellbaren Anordnung von Werkzeugen entlang eines Formungspfads 5 umfasst zwei parallel zueinander in der Längsrichtung des Formungspfads 5 verlaufend und oberhalb davon angeordnete Trägerschienen 1. Eine Mehrzahl von Querträgern 3 ist an je einer von mehreren vorbestimmten Positionen entlang des Formungspfads 5 jeweils mit beiden Trägerschienen 1 lösbar so verbunden, dass die Querträger 3 quer zur Längsrichtung des Formungspfads 5 angeordnet sind. Die Querträger 3 weisen jeweils an einem Ende eine Klemmeinrichtung 31 zur Herstellung einer kraftschlüssigen Verbindung mit einer Trägerschiene 1 auf.

An einigen der Querträger 3 sind Werkzeughalter 4 mit dem jeweiligen Querträger 3 lösbar verbunden. Die Werkzeughalter 4 sind jeweils an beliebigen Positionen entlang des Querträgers 3 positionierbar. Die Werkzeughalter 4 umfassen eine Haltestrebe 42 zur Verbindung mit dem Querträger 3, die durch eine Klemmeinrichtung 41 kraftschlüssig am Querträger 3 angebracht ist.

An jeder der beiden Trägerschienen 1 sind Stützelemente 2 zur Anbringung der Trägerschiene 1 oberhalb des Formungspfads 5 vorgesehen. Im Ausführungsbeispiel sind die Stützelemente 2 senkrechte Stützstäbe , die sich von den Trägerschienen 1 abwärts erstrecken, so dass ihre unteren Enden mit Elementen der Transporteinrichtung der Vorrichtung, beispielsweise den Lagerbänken von Transportwalzen einer derartigen Transporteinrichtung, verbindbar sind.

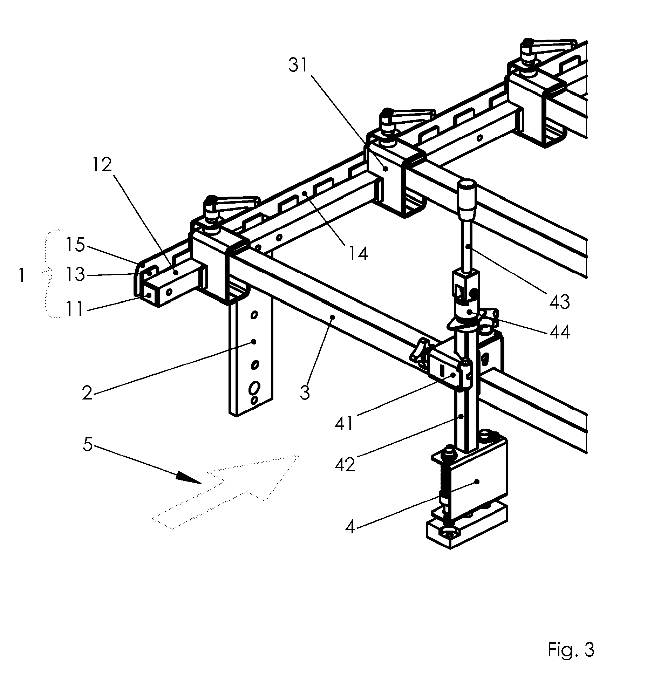

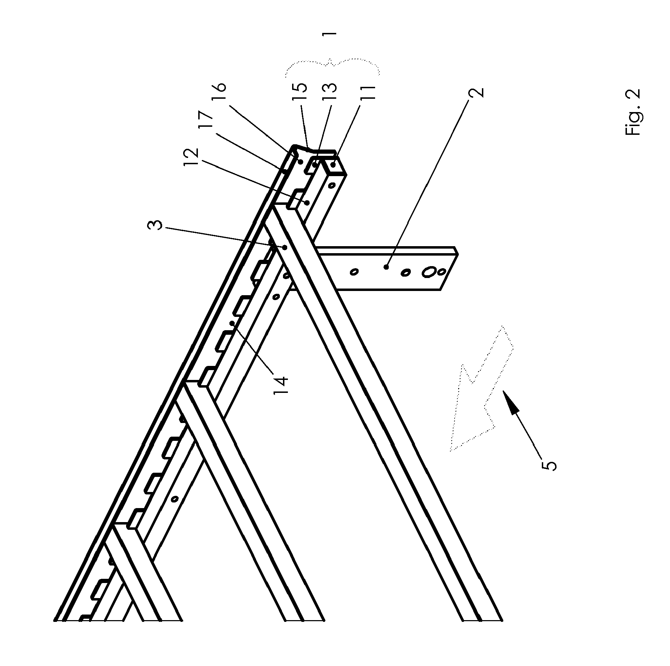

In Fig. 2 ist eine Detailansicht einer ersten Trägerschiene 1 dargestellt. An der Trägerschiene 1 ist ein Stützelement 2 zur Anbringung der Trägerschiene 1 oberhalb des Formungspfads 5 angeordnet. Die Trägerschiene 1 umfasst einen Stab 11 mit Rechteckquerschnitt mit einer ebenen Auflagefläche 12. An der äußeren seitlichen Begrenzung der Auflagefläche 12 des Stabs 11 ist ein parallel zum Stab 11 verlaufender, erster Materialstreifen 13 mit nach oben offenen Aussparungen 14 angeordnet, wobei die Aussparungen 14 als seitliche Anschläge gegen ungewollte Bewegungen der Querträger 3 in der Längsrichtung des Umformpfads 5 für die Querträger 3 dienen. An der der Auflagefläche 12 abgewandten Seite des ersten Materialstreifens 13 ist ein zweiter Materialstreifen 15 mit einem abgekanteten oberen Bereich 17 angeordnet, wobei der untere Bereich 16 als Anschlag für die Querträger 3 gegen ungewollte Bewegungen der Querträger 3 quer zur Längsrichtung des Umformpfads 5 und der abgekantete obere Bereich 17 als Niederhalter für die Querträger 3 dient.

Die Querträger 3, die im Ausführungsbeispiel als Stäbe mit Rechteckquerschnitt ausgeführt sind, können durch eine Bedienperson auf einfache Weise in das von einer Aussparung 14 des ersten Materialstreifens 13 und vom abgekanteten oberen Bereich 17 des zweiten Materialstreifens 15 gemeinsam gebildete Aufnahmemittel eingeschoben werden, so dass das Ende des jeweiligen Querträgers 3 auf der Auflagefläche 12 der Trägerschiene 1 aufliegt und gleichzeitig formschlüssig mit der Trägerschiene 1 verbunden ist.

In Fig. 3 ist eine Detailansicht einer zweiten Trägerschiene 1 dargestellt. An der Trägerschiene 1 ist ein Stützelement 2 zur Anbringung der Trägerschiene 1 oberhalb des Formungspfads 5 angeordnet. Die Trägerschiene 1 umfasst einen Stab 11 mit Rechteckquerschnitt mit einer ebenen Auflagefläche 12. An der äußeren seitlichen Begrenzung des Stabs 11 ist ein parallel zum Stab 11 verlaufender, erster Materialstreifen 13 mit nach oben offenen Aussparungen 14 angeordnet, wobei die Aussparungen 14 als seitliche Anschläge gegen ungewollte Bewegungen der Querträger 3 in der Längsrichtung des Umformpfads 5 für die Querträger 3 dienen. An der der Auflagefläche 12 entgegengesetzten Seite des ersten Materialstreifens 13 ist ein zweiter Materialstreifen 15 angeordnet, der als Anschlag für die Querträger 3 gegen ungewollte Bewegungen der Querträger 3 quer zur Längsrichtung des Umformpfads 5 dient.

Nachdem das erste Ende eines Querträgers 3, wie oben bei Fig. 2 beschrieben, von oben in das durch eine nach oben offene Aussparung 14 des ersten Materialstreifens 13 und den zweiten Materialstreifen 15 der ersten Trägerschiene 1 gebildete Aufnahmemittel eingeschoben wurde, kann das zweite Ende des Querträgers 3, das mit einer Klemmeinrichtung 31 versehen ist, von oben in das durch eine nach oben offene Aussparung 14 des ersten Materialstreifens 13 und den zweiten Materialstreifen 15 der zweiten Trägerschiene 1 gebildete Aufnahmemittel eingelegt werden, so dass das zweite Ende des Querträgers 3 auf der Auflagefläche 12 der zweiten Trägerschiene 1 aufliegt und schließlich mithilfe der Klemmeinrichtung 31 eine kraftschlüssige Verbindung zwischen dem zweiten Ende des Querträgers 3 und der zweiten Trägerschiene 1 hergestellt werden.

An einem der in der Figur dargestellten Querträger 3 ist ein Werkzeughalter 4 lösbar angebracht. Der Werkzeughalter 4 ist dadurch an beliebigen Positionen entlang des Querträgers 3 positionierbar. Der Werkzeughalter 4 umfasst eine Haltestrebe 42 zur Verbindung mit dem Querträger 3, die durch eine Klemmeinrichtung 41 kraftschlüssig am Querträger 3 angebracht ist.

Eine Höhenverstelleinrichtung zur vertikalen Verstellung des Werkzeugs umfasst einen Exzenterhebel 43, der auf dem oberen Ende einer Rohrhülse der Haltestrebe 42, die mittels der Klemmeinrichtung 41 mit dem Querträger 3 verbunden ist, aufliegt. Der Exzenterhebel 43 ist an einem in der Rohrhülse verschiebbar gelagerten, an seinen unteren Ende das Werkzeug tragenden Stab drehbar so gelagert, dass der Stab und damit das Werkzeug bei Betätigung des Exzenterhebels 43 je nach dessen Betätigungsrichtung in vertikaler Richtung abgesenkt oder angehoben wird. In einer ersten Stellung des Exzenterhebels 43 befindet sich der verschiebbar gelagerte Stab mit dem daran angeordneten Werkzeug in einer ersten, angehobenen Position und in einer zweiten Stellung des Exzenterhebels 43 in einer zweiten, abgesenkten Position. Weiterhin umfasst die Höhenverstelleinrichtung des Werkzeughalters 4 mindestens eine Stellschraube 44 mit einem Feingewinde als Mittel zur stufenlosen Feinjustage der vertikalen Position des Werkzeugs.

### Bezugszeichenliste

- 1: Trägerschiene
- 11: Stab
- 12: Auflagefläche
- 13: erster Materialstreifen
- 14: Aussparung
- 15: zweiter Materialstreifen
- 16: unterer Bereich
- 17: oberer Bereich
- 2: Stützelement
- 3: Querträger
- 31: Klemmeinrichtung
- 4: Werkzeughalter
- 41: Klemmeinrichtung
- 42: Haltestrebe
- 43: Exzenterhebel
- 44: Stellschraube
- 5: Formungspfad

## Patentansprüche

1. Werkzeugträgereinrichtung zur verstellbaren Anordnung von Werkzeugen entlang eines Formungspfads (5), umfassend zwei parallel zueinander in der Längsrichtung des Formungspfads (5) verlaufend und oberhalb davon angeordnete Trägerschienen (1), weiter umfassend mindestens einen Querträger (3), der an mehreren vorbestimmten Positionen entlang des Formungspfads (5) jeweils mit beiden Trägerschienen (1) lösbar so verbindbar ist, dass er quer zur Längsrichtung des Formungspfads (5) angeordnet ist, sowie weiter umfassend mindestens einen Werkzeughalter (4), der mit dem Querträger (3) lösbar verbindbar ist.

2. Werkzeugträgereinrichtung nach Anspruch 1, **dadurch gekennzeichnet, dass** der Werkzeughalter (4) an einer beliebigen Position entlang des Querträgers (3) positionierbar ist.

3. Werkzeugträgereinrichtung nach Anspruch 1, **dadurch gekennzeichnet, dass** der Werkzeughalter (4) an mehreren vorbestimmten Positionen entlang des Querträgers (3) positionierbar ist.

4. Werkzeugträgereinrichtung einem der vorhergehenden Ansprüche, **dadurch gekennzeichnet, dass** weiterhin an jeder Trägerschiene (1) mindestens ein Stützelement (2) zur Anbringung der Trägerschiene (1) oberhalb des Formungspfads (5) vorgesehen ist.

5. Werkzeugträgereinrichtung nach einem der vorhergehenden Ansprüche, **dadurch gekennzeichnet, dass** mindestens eine Trägerschiene (1) an jeder vorbestimmten Position ein Aufnahmemittel zur formschlüssigen Aufnahme eines Endes eines Querträgers (3) aufweist.

6. Werkzeugträgereinrichtung nach Anspruch 5, **dadurch gekennzeichnet, dass** das Aufnahmemittel zum Einschieben eines Endes des Querträgers (3) quer zur Längsrichtung des Formungspfads (5) ausgebildet ist.

7. Werkzeugträgereinrichtung nach Anspruch 5 oder 6, **dadurch gekennzeichnet, dass** das Aufnahmemittel eine dem Querschnitt des Querträgers (3) entsprechende Aussparung (14) ist.

8. Werkzeugträgereinrichtung nach einem der Ansprüche 5 bis 7, **dadurch gekennzeichnet, dass** mindestens eine Trägerschiene (1) einen Stab (11) mit einer ebenen Auflagefläche (12) umfasst, an deren seitlicher Begrenzung parallel zum Stab (11) verlaufend ein erster Materialstreifen (13) angeordnet ist, der die Auflagefläche (12) nach oben überragt und der an jeder vorbestimmten Position eine nach oben offene Aussparung (14) aufweist.

9. Werkzeugträgereinrichtung nach Anspruch 8, **dadurch gekennzeichnet, dass** an der der Auflagefläche (12) des Stabs (11) abgewandten Seite des ersten Materialstreifens (13) ein zweiter Materialstreifen (15) vorgesehen ist, der die Bewegung des Querträgers (3) quer zur Längsrichtung des Stabs (11) begrenzt.

10. Werkzeugträgereinrichtung nach Anspruch 9, **dadurch gekennzeichnet, dass** der zweite Materialstreifen (15) den ersten Materialstreifen (13) nach oben überragt und der obere Bereich (17) des zweiten Materialstreifens (15) so abgekantet ist, dass der obere Bereich (17) des zweiten Materialstreifens (15) horizontal über den ersten Materialstreifen (13) ragt und so die Bewegung des Querträgers (3) in vertikaler Richtung begrenzt.

11. Werkzeugträgereinrichtung nach einem der vorhergehenden Ansprüche, **dadurch gekennzeichnet, dass** mindestens ein Querträger (3) an mindestens einem Ende eine Klemmeinrichtung (31) zur Herstellung einer kraftschlüssigen Verbindung mit einer Trägerschiene (1) aufweist.

12. Werkzeugträgereinrichtung nach einem der vorhergehenden Ansprüche, **dadurch gekennzeichnet, dass** der Werkzeughalter (4) mindestens eine Haltestrebe (42) zur Verbindung mit dem Querträger (3) aufweist.

13. Werkzeugträgereinrichtung nach Anspruch 12, **dadurch gekennzeichnet, dass** die Haltestrebe (42) eine Höhenverstelleinrichtung zur vertikalen Verstellung des Werkzeugs umfasst.

14. Werkzeugträgereinrichtung nach Anspruch 13, **dadurch gekennzeichnet, dass** die Höhenverstelleinrichtung einen Exzenterhebel (43) umfasst, der mit einer ersten, mit dem Querträger (3) verbindbaren Komponente und mit einer zweiten, das Werkzeug tragenden Komponente der Haltestrebe (42) so in Wirkverbindung steht, dass das Werkzeug bei Betätigung des Exzenterhebels (43) je nach dessen Betätigungsrichtung in vertikaler Richtung abgesenkt oder angehoben wird.

15. Werkzeugträgereinrichtung nach Anspruch 12 oder 13, **dadurch gekennzeichnet, dass** die Höhenverstelleinrichtung Mittel zur stufenlosen Feinjustage der vertikalen Positionen des Werkzeugs umfasst.

16. Werkzeugträgereinrichtung nach einem der vorhergehenden Ansprüche, **dadurch gekennzeichnet, dass** an mindestens einer Trägerschiene (1) im Bereich mindestens einer vorbestimmten Position eine diese Position eindeutig identifizierende Bezeichnung sichtbar angebracht ist.

17. Vorrichtung zur Verarbeitung flacher Zuschnitte, umfassend eine Werkzeugträgereinrichtung nach einem der Ansprüche 1 bis 16.

18. Vorrichtung nach Anspruch 17, weiter umfassend eine Transporteinrichtung zum Transport der Zuschnitte entlang des Formungspfads, die eine Anordnung beidseitig des Formungspfads mit gleichem Abstand drehbar gelagerter Transportwalzen umfasst und bei der die Werkzeugträgereinrichtung so angeordnet ist, dass das oder die Werkzeuge relativ zu den Transportwalzen positionierbar angeordnet sind.

19. Vorrichtung nach Anspruch 17 oder 18, **dadurch gekennzeichnet, dass** der Abstand vorbestimmter Positionen entlang der Trägerschienen (1) der Werkzeugträgereinrichtung gleich dem Abstand der Transportwalzen der Transporteinrichtung ist.
